(19)

**Europäisches Patentamt**

**European Patent Office**

**Office européen des brevets**

(11) **EP 3 778 203 A1**

(12) **EUROPEAN PATENT APPLICATION**
published in accordance with Art. 153(4) EPC

(43) Date of publication:
**17.02.2021 Bulletin 2021/07**

(21) Application number: **19774905.4**

(22) Date of filing: **29.03.2019**

(51) Int Cl.:
**B29D 11/00** *(2006.01)*          **G02B 3/00** *(2006.01)*
**G02C 7/02** *(2006.01)*          **G02C 13/00** *(2006.01)*

(86) International application number:
**PCT/JP2019/014177**

(87) International publication number:
**WO 2019/189825 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2018 JP 2018066230**

(71) Applicant: **Hoya Lens Thailand Ltd.
Pathumthani 12130 (TH)**

(72) Inventor: **SANO, Yoshio
Tokyo 160-8347 (JP)**

(74) Representative: **Beckmann, Claus
Kraus & Weisert
Patentanwälte PartGmbB
Thomas-Wimmer-Ring 15
80539 München (DE)**

(54) **METHOD FOR PRODUCING OPTICAL MEMBER**

(57)     Provided is a method for producing an optical component, the method including a step of polymerizing a polymerizable composition including a polythiol component and a polyisocyanate component in a molding die, wherein the molding die includes a pair of molds and a tape for separating these molds apart and fixing the molds, the tape has a tape substrate and a tacky adhesive layer, and a percentage moisture content in the tacky adhesive layer is 950 ppm by mass or less, and also provided is a molding die tape for a spectacle lens substrate, the molding die tape having a tape substrate and a tacky adhesive layer, wherein a percentage moisture content in the tacky adhesive layer is 950 ppm by mass or less.

**EP 3 778 203 A1**

**Description**

Technical Field

The present disclosure relates to a method for producing an optical component such as a spectacle lens, and to a molding die tape for a spectacle lens substrate.

Background Art

Lenses made of resins are advantageous in that the lenses are lightweight compared to lenses formed from inorganic materials such as inorganic glass, are not easily crackable, and can be dyed. Therefore, currently, it is the mainstream to use a lens made of a resin as an optical component such as a spectacle lens or a camera lens.

Described in Patent Literature 1 is a method for producing a polyurethane-based plastic lens that is obtainable by reacting one kind or two or more kinds of ester compounds selected from a polyisocyanate compound, a polyisothiocyanate compound, and an isothiocyanate compound having an isocyanate group, with one kind or two or more kinds of active hydrogen compounds selected from a polyol compound, a polythiol compound, and a thiol compound having a hydroxy group, wherein two matrices disposed to face each other are fixed using an adhesive tape obtained by applying a silicone-based tacky adhesive on a plastic film substrate having a water vapor permeability of 2 g/m$^2$·24 hr·0.1 mm or less, injecting a raw material monomer into the pores of the two matrices, and thermally polymerizing the monomer.

Citation List

Patent Literature

Patent Literature 1: JP 10-128861 A

Summary of Invention

Technical Problem

As disclosed in Patent Literature 1, at the time of producing an optical component, in order to polymerize a polymerizable composition including a polythiol component and a polyisocyanate component, the polymerizable composition is injected into a molding die and polymerized, and thereby an optical component is produced.

At this time, a molding die produced by fixing a pair of molds with a tape and thereby forming a cavity is used; however, depending on the tape to be used, there have been occasions in which cloudiness or gas bubbles are observed in the resulting optical component.

Thus, an embodiment of the present disclosure relates to a method for producing an optical component, by which cloudiness and the generation of gas bubbles are suppressed, and a molding die tape for a spectacle lens substrate.

Solution to Problem

The inventors of the present invention analyzed all of the causes in connection with the production process for an optical component and eventually found that the moisture included in the tacky adhesive layer of the tape used for the molding die causes cloudiness and the generation of gas bubbles.

An embodiment of the present disclosure relates to:

a method for producing an optical component, the method including a step of polymerizing a polymerizable composition including a polythiol component and a polyisocyanate component in a molding die,
wherein the molding die includes a pair of molds and a tape for separating these molds apart and fixing these molds,
the tape has a tape substrate and a tacky adhesive layer, and
a percentage moisture content in the tacky adhesive layer is 950 ppm by mass or less.

Advantageous Effects of Invention

An embodiment of the present disclosure relates to a method for producing an optical component, by which cloudiness and the generation of gas bubbles are suppressed, and a molding die tape for a spectacle lens substrate.

Description of Embodiments

[Method for producing optical component]

The method for producing an optical component according to an embodiment of the present disclosure includes: a step of polymerizing a polymerizable composition including a polythiol component and a polyisocyanate component in a molding die (hereinafter, also referred to as "polymerization step").

The molding die comprises a pair of molds and a tape for separating these molds apart and fixing the molds.

Thus, the tape has a tape substrate and a tacky adhesive layer, and the percentage moisture content in the tacky adhesive layer is 950 ppm by mass or less.

By having the above-described configuration, a method for producing an optical component, by which cloudiness and the generation of gas bubbles are suppressed, and a molding die tape for a spectacle lens substrate, can be provided.


[Tape]

The percentage moisture content in the tacky adhesive layer of the tape is 950 ppm by mass or less, from the viewpoint of suppressing cloudiness and the generation of gas bubbles.

The percentage moisture content in the tacky adhesive layer of the tape is preferably 900 ppm by mass or less, and more preferably 800 ppm by mass or less, from the viewpoint of more notably suppressing cloudiness and the generation of gas bubbles; from the viewpoint of more notably suppressing cloudiness and the generation of gas bubbles and striae, the moisture content is even more preferably 500 ppm by mass or less, still more preferably 300 ppm by mass or less, even more preferably 100 ppm by mass or less, and still more preferably 50 ppm by mass or less; and the moisture content is preferably 0 ppm by mass. That is, it is preferable that moisture is not included.

The method for measuring the percentage moisture content in the tacky adhesive layer of the tape follows the method described in the Examples.

The tape has a tape substrate and a tacky adhesive layer.

Examples of the material for the tape substrate include polyethylene terephthalate, polyphenylene sulfide, polyethylene naphthalate, polyvinylidene chloride, polyvinylidene fluoride, polypropylene, and polyimide.

Among these, from the viewpoint of more notably suppressing cloudiness and the generation of gas bubbles, polyethylene terephthalate, polyphenylene sulfide, and polyethylene naphthalate are preferred.

From the viewpoint of more notably suppressing cloudiness and the generation of gas bubbles, the thickness of the tape substrate is preferably 10 $\mu$m or more, more preferably 15 $\mu$m or more, and even more preferably 20 $\mu$m or more, and is preferably 80 $\mu$m or less, more preferably 60 $\mu$m or less, and even more preferably 40 $\mu$m or less.

The tacky adhesive layer preferably contains a silicone tacky adhesive from the viewpoint of more notably suppressing cloudiness and the generation of gas bubbles.

Examples of the silicone tacky adhesive include a peroxide-curable silicone tacky adhesive and an addition-curable silicone tacky adhesive. Among these, the peroxide-curable silicone tacky adhesive is preferred.

The peroxide-curable silicone tacky adhesive is preferably used in combination with a peroxide.

Regarding the peroxide, for example, benzoyl peroxide may be mentioned. The amount of use of the peroxide is preferably 0.1 to 5 parts by mass with respect to 100 parts by mass of the peroxide-curable silicone tacky adhesive.

Examples of commercially available products of the peroxide-curable silicone tacky adhesive include "KR-100", "KR-101-10", and "KR-130" (all manufactured by Shin-Etsu Chemical Co., Ltd.).

Examples of commercially available products of the addition-curable silicone tacky adhesive include "KR3700", "KR3701", "KR3704", "X-40-3237", "X-40-3240", "X-40-3291-1", "X-40-3323", "X-40-3270-1", and "X-40-3306" (all manufactured by Shin-Etsu Chemical Co., Ltd.).

The tacky adhesive layer preferably further contains silica particles from the viewpoint of more notably suppressing cloudiness and the generation of gas bubbles.

The silica particles are preferably hydrophilic silica particles.

The BET specific surface area of the silica particles is preferably 30 $m^2$/g or more, more preferably 70 $m^2$/g or more, even more preferably 100 $m^2$/g or more, and still more preferably 150 $m^2$/g or more, and is preferably 400 $m^2$/g or less, more preferably 350 $m^2$/g or less, and even more preferably 300 $m^2$/g or less.

Examples of commercially available products of the silica particles include "50", "90G", "130", "200", "200CF", "200V", and "380" of "AEROSIL" series (all manufactured by NIPPON AEROSIL CO., LTD.).

The content of the silica particles is preferably 1 part by mass or more, more preferably 5 parts by mass or more, and even more preferably 8 parts by mass or more, and is preferably 30 parts by mass or less, more preferably 20 parts by mass or less, and even more preferably 15 parts by mass or less, with respect to 100 parts by mass of the silicone tacky adhesive.

The content of the silicone tacky adhesive in the tacky adhesive layer is preferably 50% by mass or more, more preferably 80% by mass or more, even more preferably 85% by mass or more, and still more preferably 90% by mass or more, and is preferably 100% by mass or less, and more preferably 95% by mass or less.

The tacky adhesive layer can be formed by, for example, dissolving the various components mentioned above in an organic solvent such as toluene and applying the solution on a tape substrate using a known coater.

From the viewpoint of more notably suppressing cloudiness and the generation of gas bubbles, the thickness of the tacky adhesive layer is preferably 10 $\mu$m or more, more preferably 15 $\mu$m or more, and even more preferably 20 $\mu$m or more, and is preferably 80 $\mu$m or less, more preferably 60 $\mu$m or less, and even more preferably 40 $\mu$m or less.

The tape is used as a molding die tape for a spectacle lens substrate as will be described below. In this manner, cloudiness and the generation of gas bubbles can be suppressed.

In the following description, a method for producing an optical component according to an embodiment of the present disclosure will be described in more detail. The method for producing an optical component according to an embodiment of the present disclosure includes, for example,

a step of mixing a polythiol component, a polyisocyanate component, and additives as necessary, and obtaining a polymerizable composition (hereinafter, also referred to as "mixing step");

a step of degassing the polymerizable composition (hereinafter, also referred to as "degassing step");

a step of injecting the polymerizable composition into a molding die (hereinafter, also referred to as "injection step"); and

a step of polymerizing the polymerizable composition (hereinafter, also referred to as "polymerization step").

<Mixing step>

In the mixing step, for example, a polythiol component, a polyisocyanate component, and additives as necessary are mixed, and a polymerizable composition is obtained. The mixing order is not particularly limited.

[Polymerizable composition]

The polymerizable composition includes a polythiol component and a polyisocyanate component.

(Polythiol component)

Examples of the polythiol component include an ester compound of a polyol compound and a mercapto group-containing carboxylic acid compound, a linear or branched aliphatic polythiol compound, a polythiol compound having an alicyclic structure, and an aromatic polythiol compound.

Regarding the ester compound of a polyol compound and a mercapto group-containing carboxylic acid compound, examples of the polyol compound include a compound having two or more hydroxyl groups in the molecule.

Examples of the polyol compound include ethylene glycol, diethylene glycol, propanediol, propanetriol, butanediol, trimethylolpropane, bis(2-hydroxyethyl) disulfide, pentaerythritol, and dipentaerythritol.

Examples of the mercapto group-containing carboxylic acid compound include thioglycolic acid, mercaptopropionic acid, a thiolactic acid compound, and thiosalicylic acid.

Examples of the ester compound of a polyol compound and a mercapto group-containing carboxylic acid compound include ethylene glycol bis(2-mercaptoacetate), ethylene glycol bis(2-mercaptopropionate), diethylene glycol bis(2-mercaptoacetate), diethylene glycol bis(2-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(2-mercaptopropionate), pentaerythritol tetrakis(3-mercaptopropionate), dipentaerythritol hexakis(2-mercaptoacetate), and dipentaerythritol hexakis(3-mercaptopropionate).

Examples of the linear or branched aliphatic polythiol compound include 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 2,2-dimethylpropane-1,3-dithiol, 3,4-dimethyloxybutane-1,2-dithiol, 2,3-dimercapto-1-propanol, 1,2-dimercaptopropyl methyl ether, 2,3-dimercaptopropyl methyl ether, 2-(2-mercaptoethylthio) propane-1,3-dithiol, 2,2-bis(mercaptomethyl)-1,3-propanedithiol, bis(mercaptomethylthio)methane, tris(mercaptomethylthio)methane, bis(2-mercaptoethylthio)methane, 1,2-bis(mercaptomethylthio)ethane, 1,2-bis(2-mercaptoethylthio)ethane 1,3-bis(mercaptomethylthio)propane, 1,3-bis(2-mercaptoethylthio)propane, 1,1,2,2-tetrakis(mercaptoethylthio)ethane, 1,1,3,3-tetrakis(mercaptoethylthio)propane, 3-mercaptomethyl-1,5-dimercapto-2,4-dithiapentane, tetrakis(mercaptoethylthio)propane, bis(2-mercaptoethyl) ether, bis(2-mercaptoethyl) sulfide, bis(2-mercaptoethyl) disulfide, bis(2-mercaptoethylthio)-3-mercaptopropane, 4-mercaptomethyl-1,8-dimercapto-3,6-dithiaoctane, 4,7-bis(mercaptomethyl)-3,6,9-trithia-1,11-undecanedithiol, 4,8-bis(mercaptomethyl)-3,6,9-trithia-1,11-undecanedithiol, and 5,7-bis(mercaptomethyl)-3,6,9-trithia-1,11-undecanedithiol.

Examples of the polythiol compound having an alicyclic structure include 1,1-cyclohexanedithiol, 1,2-cyclohexanedithiol, methylcyclohexanedithiol, bis(mercaptomethyl) cyclohexane, 2-(2,2-bis(mercaptomethylthio)ethyl)-1,3-dithietane, 2,5-bis(mercaptomethyl)-1,4-dithiane, and 4,8-bis(mercaptomethyl)-1,3-dithiane.

Examples of the aromatic polythiol compound include 1,3-dimercaptobenzene, 1,4-dimercaptobenzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptoethyl)benzene, 4,4'-dimercaptobiphenyl, 4,4'-dimercaptobibenzyl, 2,5-toluenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracene dimethanethiol, 1,3-di(p-methyloxyphenyl)propane-2,2-dithiol, 1,3-diphenylpropane-2,2-dithiol, phenyl methane-1,1-dithiol, and 2,4-di(p-mercaptophenyl)pentane.

These may be used singly or in combination of two or more kinds thereof.

The polythiol component
preferably includes at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithia-1,11-undecanedithiol, 4,8-bis(mercaptomethyl)-3,6,9-trithia-1,11-undecanedithiol, 5,7-bis(mercaptomethyl)-3,6,9-trithia-1,11-undecanedithiol trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate);
more preferably includes at least one selected from the group consisting of 4,7-bis(mercaptomethyl)-3,6,9-trithia-1,11-undecanedithiol, 4,8-bis(mercaptomethyl)-3,6,9-trithia-1,11-undecanedithiol, 5,7-bis(mercaptomethyl)-3,6,9-trithia-1,11-undecanedithiol, 4-mercaptomethyl-1,8-dimercapto-3,6-dithiaoctane, pentaerythritol tetrakis(3-mercaptopropionate), 2,5-bis(mercaptomethyl)-1,4-dithiane, and pentaerythritol tetrakis(2-mercaptoacetate); and
even more preferably includes at least one selected from the group consisting of 4,7-bis(mercaptomethyl)-3,6,9-trithia-1,11-undecanedithiol, 4,8-bis(mercaptomethyl)-3,6,9-trithia-1,11-undecanedithiol, 5,7-bis(mercaptomethyl)-3,6,9-trithia-1,11-undecanedithiol, pentaerythritol tetrakis(3-mercaptopropionate), and 4-mercaptomethyl-1,8-dimercapto-3,6-dithiaoctane, and
still more preferably, the polythiol compound is a mixture of 4,7-bis(mercaptomethyl)-3,6,9-trithia-1,11-undecanedithiol, 4,8-bis(mercaptomethyl)-3,6,9-trithia-1,11-undecanedithiol, and 5,7-bis(mercaptomethyl)-3,6,9-trithia-1,11-undecanedithiol, or a mixture of pentaerythritol tetrakis(3-mercaptopropionate) and 4-mercaptomethyl-1,8-dimercapto-3,6-dithiaoctane.

The amount of the above-mentioned preferred polythiol component is preferably 50% by mass or more, more preferably 70% by mass or more, even more preferably 90% by mass or more, still more preferably 95% by mass or more, and 100% by mass or less, among the polythiol components.

(Polyisocyanate component)

Examples of the polyisocyanate component include a polyisocyanate compound having an aromatic ring, an alicyclic polyisocyanate compound, and a linear or branched aliphatic polyisocyanate compound.

Examples of the polyisocyanate compound having an aromatic ring include diisocyanatobenzene, 2,4-diisocyanatotoluene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylene bis(phenyl isocyanate), 4,4'-methylenebis(2-methylphenyl isocyanate), bibenzyl-4,4'-diisocyanate, bis(isocyanatophenyl)ethylene, 1,3-bis(isocyanatomethyl)benzene, 1,4-bis(isocyanatomethyl)benzene, 1,3-bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethylphenyl) ether, 2-isocyanatophenyl-4-isocyanatophenyl sulfide, bis(4-isocyanatophenyl) sulfide, bis(4-isocyanatomethylphenyl) sulfide, bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methyloxy-4-isocyanatophenyl) disulfide, and bis(4-methyloxy-3-isocyanatophenyl) disulfide.

Examples of the alicyclic polyisocyanate compound include 1,3-diisocyanatocyclohexane, isophorone diisocyanate, 1,3-bis(isocyanatomethyl)cyclohexane, 1,4-bis(isocyanatomethyl)cyclohexane, dicyclohexylmethane-4,4'-diisocyanate, 2,5-bis(isocyanatomethyl)-bicyclo[2,2,1]heptane, 2,6-bis(isocyanatomethyl)-bicyclo[2,2,1]heptane, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, and 4,5-bis(isocyanatomethyl)-2-methyl-1,3-dithiolane.

Examples of the linear or branched aliphatic polyisocyanate compound include hexamethylene diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato 4-isocyanatomethyloctane, bis(isocyanatoethyl) carbonate, bis(isocyanatoethyl) ether, lysine diisocyanatomethyl ester, lysine triisocyanate, bis(isocyanatomethyl) sulfide, bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatoethyl) disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-pentane, 1,2,3-tris(isocyanatomethylthio)propane, 1,2,3-tris(isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, 4-isocyanatoethylthio-2,6-dithia-1,8-octanediisocyanate, 1,2-diisothiocyanatoethane, and 1,6-diisothiocyanatohexane.

These may be used singly or in combination of two or more kinds thereof.

The polyisocyanate component
preferably includes at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl)cyclohexane, 1,4-bis(isocyanatomethyl)cyclohexane, 1,3-bis(isocyanatomethyl)benzene, 1,4-bis(isocyanatomethyl)benzene, dicyclohexylmethane-4,4'-diisocyanate, isophorone diisocyanate, and hexamethylene diisocyanate;
more preferably includes at least one selected from the group consisting of 1,3-bis(isocyanatomethyl)benzene, hexamethylene diisocyanate, and 1,3-bis(isocyanatomethyl)cyclohexane; and
even more preferably includes a mixture of 2,5-bis(isocyanatomethyl)-bicyclo[2.2.1]heptane and 2,6-bis(isocyanatomethyl)-bicyclo[2.2.1]heptane, or 1,3-bis(isocyanatomethyl)benzene. The amount of the above-mentioned preferred polyisocyanate component is preferably 50% by mass or more, more preferably 70% by mass or more, even more preferably 90% by mass or more, still more preferably 95% by mass or more, and 100% by mass or less, among the polyisocyanate components.

The equivalent ratio between mercapto groups of the polythiol component and isocyanate groups of the polyisocyanate component (mercapto groups/isocyanate groups) is preferably 40/60 or higher, more preferably 43/57 or higher, even more preferably 45/55 or higher, and is preferably 60/40 or lower, more preferably 55/45 or lower, and even more preferably 53/47 or lower.

Examples of a suitable combination of the polythiol component and the polyisocyanate component for the polymerizable composition include:

(i) 1,3-bis(isocyanatomethyl)benzene and a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, and
(ii) a mixture of 2,5-bis(isocyanatomethyl)-bicyclo[2.2.1]heptane and 2,6-bis(isocyanatomethyl)-bicyclo[2.2.1]heptane, and a mixture of pentaerythritol tetrakis(3-mercaptopropionate) and 4-mercaptomethyl-1,8-dimercapto-3,6-dithiaoctane.

(Additives)

Examples of the additives include a polymerization catalyst, a mold release agent, an ultraviolet absorber, an antioxidant, a coloration inhibitor, and a fluorescent brightening agent. These may be used singly or in combination of two or more kinds thereof.

The additives preferably include at least one selected from the group consisting of a polymerization catalyst, a mold release agent, and an ultraviolet absorber.

By mixing the above-described various components by a usual method, a resin for an optical component is obtained.

(Polymerization catalyst)

Examples of the polymerization catalyst include a tin compound and a nitrogen-containing compound.

Examples of the tin compound include an alkyl tin compound and an alkyl tin halide compound.

Examples of the alkyl tin compound include dibutyl tin diacetate and dibutyl tin dilaurate.

Examples of the alkyl tin halide compound include dibutyl tin dichloride, dimethyl tin dichloride, monomethyl tin trichloride, trimethyl tin chloride, tributyl tin chloride, tributyl tin fluoride, and dimethyl tin dibromide.

Among these, dibutyl tin diacetate, dibutyl tin dilaurate, dibutyl tin dichloride, and dimethyl tin dichloride are preferred, and dimethyl tin dichloride is more preferred.

Examples of the nitrogen-containing compound include a tertiary amine, a quaternary ammonium salt, an imidazole-based compound, and a pyrazole-based compound. The tertiary amine is preferably a hindered amine.

Examples of the tertiary amine include triethylamine, tri-n-propylamine, triisopropylamine, tri-n-butylamine, triisobutylamine, N,N-dimethylbenzylamine, N-methylmorpholine, N,N-dimethylcyclohexylamine, pentamethyldiethylenetriamine, bis(2-dimethylaminoethyl) ether, N-methylmorpholine, N,N'-dimethylpiperazine, N,N,N',N'-tetramethylethylenediamine, and 1,4-diazabicyclo[2.2.2]octane (DABCO).

Examples of the hindered amine include 1,2,2,6,6-pentamethyl-4-piperidinol, 1,2,2,6,6-pentamethyl-4-hydroxyethyl-4-piperidinol, methyl-1,2,2,6,6-pentamethyl-4-piperidyl sebacate, a mixture of methyl-1,2,2,6,6-pentamethyl-4-piperidyl sebacate and bis(1,2,2,6,6-pentamethyl-4-piperidyl) sebacate, bis(1,2,2,6,6-pentamethyl-4-piperidyl) sebacate, bis(2,2,6,6-tetramethyl-1-(octyloxy)-4-piperidyl) sebacate, bis(1,2,2,6,6-pentamethyl-4-piperidyl) [[3,5-bis(1,1-dimethylethyl)-4-hydroxyphenyl]methyl]butyl malonate, and tetrakis(1,2,2,6,6-pentamethyl-4-piperidyl)butane-1,2,3,4-tetracarboxylate.

Examples of the quaternary ammonium salt include tetraethylammonium hydroxide.

Examples of the imidazole-based compound include imidazole, 1,2-dimethylimidazole, benzylmethylimidazole, and 2-ethyl-4-imidazole.

Examples of the pyrazole-based compound include pyrazole and 3,5-dimethylpyrazole.

Among these, a tertiary amine such as a hindered amine, an imidazole-based compound, and a pyrazole-based compound are preferred, and a hindered amine is more preferred.

The amount of addition of the polymerization catalyst is preferably 0.001 parts by mass or more, more preferably 0.005 parts by mass or more, and even more preferably 0.007 parts by mass or more, and is preferably 2 parts by mass or less, more preferably 1 part by mass or less, and even more preferably 0.5 parts by mass or less, with respect to a total amount of 100 parts by mass of the polythiol component and the polyisocyanate component.

(Mold release agent)

Examples of the mold release agent include acidic phosphoric acid esters such as an acidic phosphoric acid alkyl ester. The number of carbon atoms in an alkyl group of the acidic phosphoric acid alkyl ester is preferably 1 or greater, and more preferably 4 or greater, and the number of carbon atoms is preferably 20 or less, and more preferably 12 or less.

The acidic phosphoric acid ester may be either a phosphoric acid monoester or a phosphoric acid diester; however, a mixture of a phosphoric acid monoester and a phosphoric acid diester is preferred.

Examples of the acidic phosphoric acid alkyl ester include isopropyl acid phosphate, butyl acid phosphate, octyl acid phosphate, nonyl acid phosphate, decyl acid phosphate, isodecyl acid phosphate, tridecyl acid phosphate, stearyl acid phosphate, propylphenyl acid phosphate, butylphenyl acid phosphate, and butoxyethyl acid phosphate.

The amount of addition of the mold release agent is preferably 0.01 parts by mass or more, more preferably 0.05 parts by mass or more, and even more preferably 0.08 parts by mass or more, and still more preferably 0.10 parts by mass or more, and is preferably 1.00 part by mass or less, more preferably 0.50 parts by mass or less, and even more preferably 0.30 parts by mass or less, with respect to a total amount of 100 parts by mass of the polythiol component and the polyisocyanate component.

(Ultraviolet absorber)

Examples of the ultraviolet absorber include a benzotriazole-based compound, a benzophenone-based compound, dibenzoylmethane, and a dibenzoylmethane-based compound. Among these compounds, a benzotriazole-based compound or a benzophenone-based compound is preferred.

Examples of the benzotriazole-based compound include 2-(2-hydroxy-5-methylphenyl)-2H-benzotriazole, 2-(2-hydroxy-3,5-di-tert-butylphenyl)-5-chloro-2H-benzotriazole, 2-(3-t-butyl-2-hydroxy-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-octylphenyl)-2H-benzotriazole, 2-(2-hydroxy-4-ethyloxyphenyl)-2H-benzotriazole, 2-(2-hydroxy-4-propyloxyphenyl)-2H-benzotriazole, 2-(2-hydroxy-4-octyloxyphenyl)-2H-benzotriazole, and 2-(2-hydroxy-4-octyloxyphenyl)-5-chloro-2H-benzotriazole.

Examples of the benzophenone-based compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone.

Examples of the dibenzoylmethane-based compound include 4-tert-butyl-4'-methoxydibenzoylmethane.

These may be used singly or in combination of two or more kinds thereof.

The amount of addition of the ultraviolet absorber is preferably 0.01 parts by mass or more, more preferably 0.10 parts by mass or more, even more preferably 0.30 parts by mass or more, and still more preferably 0.40 parts by mass or more, and is preferably 5 parts by mass or less, more preferably 3 parts by mass or less, and even more preferably 2 parts by mass or less, with respect to a total amount of 100 parts by mass of the polythiol component and the polyisocyanate component.

The total amount of the polythiol component and the polyisocyanate component in the polymerizable composition is preferably 50% by mass or more, more preferably 70% by mass or more, even more preferably 90% by mass or more, and still more preferably 95% by mass or more, and is preferably 99.9% by mass or less, and more preferably 99.6% by mass or less.

<Degassing step>

The polymerizable composition obtained in the mixing step preferably has a step of degassing, from the viewpoint of further suppressing the generation of striae and white turbidity in the optical component.

Degassing is performed by, for example, treating the polymerizable composition under reduced pressure conditions.

The pressure during degassing is preferably 10 Pa or higher, more preferably 50 Pa or higher, and still more preferably 100 Pa or higher, and the pressure is preferably 1,000 Pa or lower, more preferably 800 Pa or lower, and still more preferably 500 Pa or lower.

<Injection step>

In the injection step, for example, the polymerizable composition thus obtained is injected into a molding die.

In a case in which a spectacle lens is produced as an optical component, for example, a molding die comprising a pair of molds that form two principal surfaces of the spectacle lens; and a tape or a gasket, which separates and fixes these molds, is used. Furthermore, the above-mentioned molds may be made of glass or may be made of a metal.

Regarding the tape, the above-mentioned tape is used. The tacky adhesive layer of the tape comes into contact with a welt surface of a mold, and a cavity is formed by a pair of molds and the tape. The tacky adhesive layer of the tape at this time faces toward the cavity side.

Prior to the injection into the molding die, the polymerization composition may be filtered. The filtration method is not particularly limited; however, filtration may be performed using, for example, a filter having a pore diameter of 1 to 30 $\mu$m.

<Polymerization step>

In the polymerization step, for example, the polymerizable composition is polymerized by heating.

Polymerization conditions can be appropriately set in accordance with the polymerizable composition and the shape of the optical component to be formed.

The polymerization initiation temperature is usually from 0°C to 50°C, and preferably from 5°C to 30°C. It is preferable that the temperature is raised from the polymerization initiation temperature, and then heating is performed to achieve curing and formation. For example, the highest temperature after the temperature rise is usually 110°C to 130°C. The polymerization time from the initiation to the completion of polymerization is, for example, 3 to 96 hours.

After completion of the polymerization, the optical component may be released from the molding die and then subjected to an annealing treatment. The temperature of the annealing treatment is preferably 100°C to 150°C.

By the method described above, a resin for an optical component is obtained.

[Optical component]

Examples of the optical component include a spectacle lens, a camera lens, a prism, an optical fiber, a substrate for a recording medium used for an optical disc, a magnetic disk or the like, and an optical filter attached to a computer display. Among these, a spectacle lens is preferred.

A spectacle lens preferably comprises a lens substrate formed from this optical component (hereinafter, also referred to as "spectacle lens substrate").

The surface shape of the spectacle lens substrate is not particularly limited and may be any one of a flat surface, a convex surface, a concave surface, or the like.

The spectacle lens substrate may be any one of a fixed focus lens, a multifocal lens, a progressive addition lens, and the like. For example, as an example, in a progressive addition lens, a near portion area (near portion) and a corridor area (intermediate area) are usually included in a lower area, and a distance portion area (distance portion) is included in an upper area.

The spectacle lens substrate may be a finish type spectacle lens substrate or a semi finish type spectacle lens substrate.

The thickness of the geometric center and the diameter of the spectacle lens substrate are not particularly limited; however, the thickness of the geometric center is usually about 0.8 to 30 mm, and the diameter is usually about 50 to 100 mm.

The refractive index ($n_e$) of the spectacle lens substrate is, for example, 1.53 or higher, 1.55 or higher, 1.58 or higher, or 1.60 or higher, and the refractive index is, for example, 1.75 or lower, or 1.70 or lower.

The spectacle lens preferably comprises a spectacle lens substrate and a functional layer on the surface of the spectacle lens substrate.

As the functional layer, for example, at least one selected from the group consisting of a hard coat layer, a primer layer, an antireflection film, and a water repellent film may be used.

The hard coat layer is provided so as to enhance scratch resistance, and preferably, the hard coat layer can be formed by applying a coating solution containing an organosilicon compound, or a microparticulate inorganic material such as tin oxide, silicon oxide, zirconium oxide, or titanium oxide.

The primer layer is provided so as to enhance impact resistance, and includes, for example, polyurethane as a main component. Here, the content of polyurethane is preferably 50% by mass or more in the primer layer.

Examples of the antireflection film include films obtained by laminating inorganic materials such as silicon oxide, titanium dioxide, zirconium oxide, and tantalum oxide.

The water repellent film can be formed using an organosilicon compound containing a fluorine atom.

[Spectacles]

Spectacles according to an embodiment of the present invention have spectacle lenses and a frame in which these spectacle lenses are mounted.

The frame has, for example, a pair of rims, a bridge provided between the rims, and a pair of temples respectively provided at one end of each of the rims.

The rims may be half rims.

The frame may be a so-called rimless frame. In this case, for example, the spectacles have a pair of spectacle lenses, a bridge provided between the spectacle lenses, and a pair of temples respectively provided at one end of each of the spectacle lenses.

Examples

Hereinafter, specific Examples will be described in connection with embodiments of the present disclosure; however, the present claims are not intended to be limited by the following Examples.

[Measurement method]

[Method for measuring water content (general)]

5 g of a measurement sample was introduced into water vaporizer device "ADP-611" (manufactured by Kyoto Electronics Manufacturing Co., Ltd.), water was vaporized for one hour at 120°C, and then the water content was measured using a Karl-Fischer moisture meter "MKC-610" (manufactured by Kyoto Electronics Manufacturing Co., Ltd.).

[Method for measuring water content of tacky adhesive of tape]

The tacky adhesive of a tape was scratched with a squeegee and collected in a sample bottle, and the mass of the tacky adhesive was measured.

The tacky adhesive thus collected was diluted in toluene, and 5 g of a tacky adhesive solution was obtained.

Using 5 g of the tacky adhesive solution, the water content $W_t$ was measured according to the method described in the above-mentioned method for measuring water content (general).

Regarding the toluene used for dilution, the water content $W_b$ is measured in advance by a method similar to that for the tacky adhesive solution, this water content is excluded from the water content of the tacky adhesive solution described above, and the water content $W_a$ in the tacky adhesive is calculated the following Formula (1).

$$W_a \text{ (ppm)} = [W_t \text{ (ppm)} \times \text{amount of tacky adhesive solution (g)} - W_b \text{ (ppm)} \times \text{amount of toluene (g)}]/\text{amount of tacky adhesive (g)} \quad (1)$$

[Evaluation methods]

<Cloudiness>

In a dark box, a region extending from the geometric center to 30 mm or less of the diameter of a spectacle lens substrate was observed by visual inspection under a fluorescent lamp, and the results were judged according to the following criteria.

A: There is no cloudiness at all in the resin.
B: There is light cloudiness in the resin.
C: There is dense cloudiness in the resin.

(unacceptable)

<Gas bubbles>

In a dark box, a region extending from the geometric center to 30 mm or less of the diameter of a spectacle lens substrate was observed by visual inspection under a fluorescent lamp, and the results were judged according to the following criteria.

A: There are no gas bubbles at all in the resin.
B: There is a very small amount of gas bubbles in the resin.
C: There is a small amount of gas bubbles in the resin.
D: There is a large amount of gas bubbles in the resin.

(unacceptable)

[Production of molding die tape]

Example T1 (molding die tape T-1)

100.0 parts by mass of a peroxide-curable silicone tacky adhesive "KR-100" (Shin-Etsu Chemical Co., Ltd.) and 1.0 part by mass of benzoyl peroxide were added, and thereby a tacky adhesive solution was prepared. This tacky adhesive solution was applied on a polyethylene terephthalate substrate having a thickness of 37 $\mu$m with a comma coater such that the thickness of the tacky adhesive layer after drying would be uniform, and was dried in an atmosphere in which the tacky adhesive surface temperature reached 140°C, and thus molding die tape T-1 was obtained. The water content in the tacky adhesive layer of the molding die tape T-1 was 900 ppm by mass. The thickness of the tacky adhesive layer was 20 $\mu$m.

Example T2 (molding die tape T-2)

100.0 parts by mass of a peroxide-curable silicone tacky adhesive "KR-100" (Shin-Etsu Chemical Co., Ltd.) and 1.0 part by mass of benzoyl peroxide were added, and thereby a tacky adhesive solution was prepared. This tacky adhesive solution was applied on a polyphenylene sulfide substrate having a thickness of 25 $\mu$m with a lip coater such that the thickness of the tacky adhesive layer after drying would be uniform, and was dried in an atmosphere in which the tacky adhesive surface temperature reached 160°C, and thus molding die tape T-2 was obtained. The water content in the tacky adhesive layer of the molding die tape T-2 was 100 ppm by mass. The thickness of the tacky adhesive layer was 35 $\mu$m.

Example T3 (molding die tape T-3)

100.0 parts by mass of a peroxide-curable silicone tacky adhesive "KR-130" (Shin-Etsu Chemical Co., Ltd.) and 1.0 part by mass of benzoyl peroxide were added, and thereby a tacky adhesive solution was prepared. This tacky adhesive solution was applied on a polyethylene naphthalate substrate having a thickness of 25 $\mu$m with a comma coater such that the thickness of the tacky adhesive layer after drying would be uniform, and was dried in an atmosphere in which the tacky adhesive surface temperature reached 200°C, and thus molding die tape T-3 was obtained. The water content in the tacky adhesive layer of the molding die tape T-3 was 10 ppm by mass. The thickness of the tacky adhesive layer was 35 $\mu$m.

Example T4 (molding die tape T-4)

Molding die tape T-4 was obtained in the same manner as in Example T1, except that 10.0 parts by mass of hydrophilic silica particles "AEROSIL 200" (NIPPON AEROSIL CO., LTD., BET specific surface area 200 $m^2$/g) were

further added to the tacky adhesive solution with respect to 100.0 parts by mass of the silicone raw material. The water content in the tacky adhesive layer of the molding die tape T-4 was 800 ppm by mass. The thickness of the tacky adhesive layer was 20 $\mu$m.

Example T5 (molding die tape T-5)

Molding die tape T-5 was obtained in the same manner as in Example T2, except that 10.0 parts by mass of silica particles were further added to the tacky adhesive solution with respect to 100.0 parts by mass of the silicone raw material. The water content in the tacky adhesive layer of the molding die tape T-5 was 80 ppm by mass. The thickness of the tacky adhesive layer was 35 $\mu$m.

Example T6 (molding die tape T-6)

Molding die tape T-6 was obtained in the same manner as in Example T3, except that 10.0 parts by mass of silica particles were further added to the tacky adhesive solution with respect to 100.0 parts by mass of the silicone raw material. The water content in the tacky adhesive layer of the molding die tape T-6 was 10 ppm by mass. The thickness of the tacky adhesive layer was 35 $\mu$m.

Comparative Example T1 (molding die tape T-51)

Molding die tape T-51 was obtained in the same manner as in Example T1, except that the drying time was adjusted, and the moisture content in the tacky adhesive layer indicated in Table 1 was obtained. The water content in the tacky adhesive layer of the molding die tape T-51 was 1,500 ppm by mass. The thickness of the tacky adhesive layer was 20 $\mu$m.

Comparative Example T2 (molding die tape T-52)

Molding die tape T-52 was obtained in the same manner as in Example T2, except that the drying time was adjusted, and the moisture content in the tacky adhesive layer indicated in Table 1 was obtained. The water content in the tacky adhesive layer of the molding die tape T-52 was 1,200 ppm by mass. The thickness of the tacky adhesive layer was 35 $\mu$m.

Comparative Example T3 (molding die tape T-53)

Molding die tape T-52 was obtained in the same manner as in Example T3, except that the drying time was adjusted, and the moisture content in the tacky adhesive layer indicated in Table 1 was obtained. The water content in the tacky adhesive layer of the molding die tape T-53 was 1,000 ppm by mass. The thickness of the tacky adhesive layer was 35 $\mu$m.

[Table 1]

| Example/ Comparative Example | Molding die tape | Tape substrate | | Tacky adhesive layer | | | | | | | Thickness (μm) | Moisture content (ppm by mass) |
|---|---|---|---|---|---|---|---|---|---|---|---|---|
| | | Material | Thickness (μm) | Material 1 | | Material 2 | | Material 3 | | | | |
| | | | | Type | Amount (parts by mass) | Type | Amount (parts by mass) | Type | Amount (parts by mass) | | | |
| Example T1 | T-1 | PET | 37 | KR-100 | 100.0 | - | - | BPO | 1.0 | 20 | 900 |
| Example T2 | T-2 | PPS | 25 | KR-100 | 100.0 | - | - | BPO | 1.0 | 35 | 100 |
| Example T3 | T-3 | PEN | 25 | KR-130 | 100.0 | - | - | BPO | 1.0 | 35 | 10 |
| Example T4 | T-4 | PET | 37 | KR-100 | 100.0 | Silica particles | 10.0 | BPO | 1.0 | 20 | 800 |
| Example T5 | T-5 | PPS | 25 | KR-100 | 100.0 | Silica particles | 10.0 | BPO | 1.0 | 35 | 80 |
| Example T6 | T-6 | PEN | 25 | KR-130 | 100.0 | Silica particles | 10.0 | BPO | 1.0 | 35 | 10 |
| Comparative Example T1 | T-51 | PET | 37 | KR-100 | 100.0 | - | - | BPO | 1.0 | 20 | 1500 |
| Comparative Example T2 | T-52 | PPS | 25 | KR-100 | 100.0 | - | - | BPO | 1.0 | 35 | 1200 |
| Comparative Example T3 | T-53 | PEN | 25 | KR-130 | 100.0 | - | - | BPO | 1.0 | 35 | 1000 |

In Table 1, the various abbreviations mean the following.

PET: Polyethylene terephthalate
PPS: Polyphenylene sulfide
PEN: Polyethylene naphthalate
BPO: Benzoyl peroxide
KR-100: Peroxide-curable silicone tacky adhesive "KR-100" (manufactured by Shin-Etsu Chemical Co., Ltd.)
KR-130: Peroxide-curable silicone tacky adhesive "KR-130" (manufactured by Shin-Etsu Chemical Co., Ltd.)

[Production of spectacle lens substrate]

Example L1

(Mixing step)

50.52 parts of 1,3-bis(isocyanatomethyl)benzene (moisture content 11 ppm by mass), 0.01 parts of dimethyltin dichloride as a polymerization catalyst, 0.10 parts of butoxyethyl acid phosphate "JP-506H" (manufactured by Johoku Chemical Co., Ltd.) as a mold release agent, and 0.5 parts of an ultraviolet absorber "SEESORB 701" (manufactured by SHIPRO KASEI KAISHA, LTD.) were mixed, and the mixture was dissolved.
Furthermore, 49.40 parts of a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol (moisture content 60 ppm by mass) was added and mixed thereinto, and a mixed liquid was obtained.

(Degassing step)

This mixed liquid was degassed at 200 Pa for one hour, and then the resulting mixed liquid was subjected to filtration with a polytetrafluoroethylene (hereinafter, also referred to as "PTFE") filter having a pore diameter of 5.0 $\mu$m.

(Injection step)

The molding die tape T-1 was wound around two sheets of glass molds (diameter 75 mm, -4.00 D), and thereby a molding die was produced.
The mixed liquid (polymerizable composition) obtained after filtration was injected to the above-described molding die.

(Polymerization step and annealing)

The molding die was inserted into an electric furnace, gradually heated from 15°C to 120°C over 20 hours, and maintained for two hours, and thereby polymerization (curing reaction) was induced. After completion of the polymerization, the molding die was taken out from the electric furnace, the resulting product was released from the molding die, and thereby a cured product (spectacle lens substrate made of a polythiourethane-based resin). The spectacle lens substrate thus obtained was further annealed for three hours in an annealing furnace at an internal furnace temperature of 120°C. Then, the evaluations of cloudiness and gas bubbles as described above were carried out, and the results are presented in Table 2.

Examples L2 to L3 and L7 to L9, and Comparative Examples L1 to L3

Spectacle lens substrates were produced in the same manner as in Example L1, except that the molding die tape was changed to those shown in Table 2. Then, the evaluations of cloudiness and gas bubbles as described above were carried out, and the results are presented in Table 2.

Example L4

A spectacle lens substrate was produced in the same manner as in Example L1, except that the mixing step was changed as follows. Then, the evaluations of cloudiness and gas bubbles as described above were carried out, and the results are presented in Table 2.

(Mixing step)

50.55 parts of a mixture of 2,5-bis(isocyanatomethyl)-bicyclo[2.2.1]heptane and 2,6-bis(isocyanatomethyl)-bicyclo[2.2.1]heptane (moisture content 18 ppm by mass), 0.05 parts of dimethyltin dichloride as a polymerization catalyst, 0.15 parts of butoxyethyl acid phosphate "JP-506H" (manufactured by Johoku Chemical Co., Ltd.) as a mold release agent, and 1.0 part of an ultraviolet absorber "SEESORB 701" (manufactured by SHIPRO KASEI KAISHA, LTD.) were mixed, and the mixture was dissolved.

Subsequently, 23.9 parts of pentaerythritol tetrakis(3-mercaptopropionate) (moisture content 70 ppm by mass) and 25.5 parts of 4-mercaptomethyl-1,8-dimercapto-3,6-dithiaoctane (moisture content 80 ppm by mass) were added and mixed thereinto, and a mixed liquid was obtained.

Examples L5 to L6 and L10 to L12, and Comparative Examples L4 to L6

Spectacle lens substrates were produced in the same manner as in Example L3, except that the molding die tape was changed to those shown in Table 2. Then, the evaluations of cloudiness and gas bubbles as described above were carried out, and the results are presented in Table 2.

[Table 2]

| Example/ Comparative Example | Molding die tape | | | | Polymerizable composition | Evaluation | |
|---|---|---|---|---|---|---|---|
| | No. | Substrate | Moisture content (ppm by mass) | Silica particles (parts by mass) | | Cloudiness | Gas bubbles |
| Example L1 | T-1 | PET | 900 | - | 1 | B | B |
| Example L2 | T-2 | PPS | 100 | - | 1 | A | A |
| Example L3 | T-3 | PEN | 10 | - | 1 | A | A |
| Example L4 | T-1 | PET | 900 | - | 2 | A | A |
| Example L5 | T-2 | PPS | 100 | - | 2 | A | A |
| Example L6 | T-3 | PEN | 10 | - | 2 | A | A |
| Example L7 | T-4 | PET | 800 | 10 | 1 | B | B |
| Example L8 | T-5 | PPS | 80 | 10 | 1 | A | A |
| Example L9 | T-6 | PEN | 10 | 10 | 1 | A | A |
| Example L10 | T-4 | PET | 800 | 10 | 2 | A | A |
| Example L11 | T-5 | PPS | 80 | 10 | 2 | A | A |
| Example L12 | T-6 | PEN | 10 | 10 | 2 | A | A |
| Comparative Example L1 | T-51 | PET | 1500 | - | 1 | C | C |
| Comparative Example L2 | T-52 | PPS | 1200 | - | 1 | C | B |
| Comparative Example L3 | T-53 | PEN | 1000 | - | 1 | C | B |
| Comparative Example L4 | T-51 | PET | 1500 | - | 2 | C | C |
| Comparative Example L5 | T-52 | PPS | 1200 | - | 2 | C | B |
| Comparative Example L6 | T-53 | PEN | 1000 | - | 2 | C | B |

The abbreviations shown in Table 2 are as follows.

<Substrate>

PET: Polyethylene terephthalate
PPS: Polyphenylene sulfide
PEN: Polyethylene naphthalate
BPO: Benzoyl peroxide

<Polymerizable composition>

1: A mixed liquid including 1,3-bis(isocyanatomethyl)benzene, and a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol (for the details, see Example L1)
2: A mixed liquid including a mixture of 2,5-bis(isocyanatomethyl)-bicyclo[2.2.1]heptane and 2,6-bis(isocyanatomethyl)-bicyclo[2.2.1]heptane, as well as pentaerythritol tetrakis(3-mercaptopropionate) and 4-mercaptomethyl-1,8-dimercapto-3,6-dithiaoctane (for the details, see Example L4)

As described above, it can be seen from the results of Examples and Comparative Examples that when the moisture content in the tacky adhesive of the tape used for a molding die is less than or equal to a certain level, cloudiness and the generation of gas bubbles can be notably suppressed.

Finally, the embodiments of the present disclosure will be summarized. An embodiment of the present disclosure relates to:

a method for producing an optical component, the method including a step of polymerizing a polymerizable composition including a polythiol component and a polyisocyanate component in a molding die,
wherein the molding die includes a pair of molds and a tape for separating these molds apart and fixing these molds,
the tape has a tape substrate and a tacky adhesive layer, and
a percentage moisture content in the tacky adhesive layer is 950 ppm by mass or less.

According to one Example described above, a method for producing an optical component, by which cloudiness and the generation of gas bubbles are suppressed, and a molding die tape for a spectacle lens substrate, can be provided.

The embodiments disclosed herein are only examples in every respect and should not be understood restrictively. The scope of the present invention is defined not by the above description but by the claims, and all modifications made within the meaning and scope equivalent to the claims are intended to be included therein.

**Claims**

1.  A method for producing an optical component, the method comprising a step of polymerizing a polymerizable composition including a polythiol component and a polyisocyanate component in a molding die,
    wherein the molding die includes a pair of molds and a tape for separating these molds apart and fixing the molds,
    the tape has a tape substrate and a tacky adhesive layer, and
    a percentage moisture content in the tacky adhesive layer is 950 ppm by mass or less.

2.  The method for producing an optical component according to claim 1, wherein the percentage moisture content in the tacky adhesive layer is 500 ppm by mass or less.

3.  The method for producing an optical component according to claim 1 or 2, wherein the tape substrate has a thickness of 10 μm to 80 μm.

4.  The method for producing an optical component according to any one of claims 1 to 3, wherein the material of the tape substrate is at least one selected from the group consisting of polyethylene terephthalate, polyphenylene sulfide, and polyethylene naphthalate.

5.  The method for producing an optical component according to any one of claims 1 to 4, wherein the tacky adhesive layer has a thickness of 10 to 80 μm.

6. The method for producing an optical component according to any one of claims 1 to 5, wherein the tacky adhesive layer contains a silicone tacky adhesive.

7. The method for producing an optical component according to claim 6, wherein the tacky adhesive layer further contains silica particles.

8. The method for producing an optical component according to any one of claims 1 to 7, wherein the polythiol component includes at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithia-1,11-undecanedithiol, 4,8-bis(mercaptomethyl)-3,6,9-trithia-1,11-undecanedithiol, 5,7-bis(mercaptomethyl)-3,6,9-trithia-1,11-undecanedithiol, trimethylolpropane tris(2-mercaptoacetate), trimethylolpropane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate).

9. The method for producing an optical component according to any one of claims 1 to 8, wherein the polyisocyanate component includes at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl)cyclohexane, 1,4-bis(isocyanatomethyl)cyclohexane, 1,3-bis(isocyanatomethyl)benzene, 1,4-bis(isocyanatomethyl)benzene, dicyclohexylmethane-4,4'-diisocyanate, isophorone diisocyanate, and hexamethylene diisocyanate.

10. The method for producing an optical component according to claims 1 to 9, wherein the optical component is a spectacle lens substrate.

11. A molding die tape for a spectacle lens substrate, the molding die tape having a tape substrate and a tacky adhesive layer,
wherein a percentage moisture content in the tacky adhesive layer is 950 ppm by mass or less.

# INTERNATIONAL SEARCH REPORT

| | International application No. |
|---|---|
| | PCT/JP2019/014177 |

**A. CLASSIFICATION OF SUBJECT MATTER**
Int. Cl. B29D11/00(2006.01)i, G02B3/00(2006.01)i, G02C7/02(2006.01)i,
G02C13/00(2006.01)i

According to International Patent Classification (IPC) or to both national classification and IPC

**B. FIELDS SEARCHED**

Minimum documentation searched (classification system followed by classification symbols)
Int. Cl. B29C39/00-39/44, B29D11/00-11/02, C09J7/00-7/50, C08G18/00-
18/87, G02B3/00, G02C7/02, G02C13/00

Documentation searched other than minimum documentation to the extent that such documents are included in the fields searched
Published examined utility model applications of Japan        1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-353734 A (SEIKO EPSON CORP.) 25 December | 1-11 |
| Y | 2001, claims, paragraphs [0001]-[0003], [0008]- | 1-11 |
| | [0039], fig. 1, 2 (Family: none) | |
| | | |
| Y | WO 2016/009778 A1 (FUJIFILM CORP.) 21 January | 1-11 |
| | 2016, claims, paragraphs [0044]-[0050], [0087] & | |
| | KR 10-2017-0018918 A | |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05.06.2019 | 18.06.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

**Patent documents cited in the description**

- JP 10128861 A